# FASCICULE DE BREVET EUROPEEN

(11) **EP 2 625 925 B1**
(45) Date de publication et mention de la délivrance du brevet: **26.06.2019**
(21) Numéro de dépôt: 10782656.2
(22) Date de dépôt: 08.10.2010
(51) Int. Cl.: H04W 88/10, H04W 8/26, H04W 28/08, H04W 72/02, H04W 84/08

(54) **IDENTIFICATION D'UN RESEAU HÔTE D'UN TERMINAL UTILISATEUR D'UNE ORGANISATION**
IDENTIFIZIERUNG EINES HOST-NETZWERKES EINES BENUTZERENDGERÄTES EINER ORGANISATION
IDENTIFYING A HOST NETWORK OF A USER TERMINAL OF AN ORGANISATION

(43) Date de publication de la demande: 14.08.2013
(73) Titulaire: Airbus DS SAS, 78990 Elancourt (FR)
(72) Inventeur: PISON, Laurent, F-78760 Jouars Ponchartrain (FR)
(74) Mandataire: Lebkiri, Alexandre
(86) Numéro de dépôt international: PCT/FR2010/052131
(87) Numéro de publication internationale: WO 2012/045920

(56) Documents cités:
- EP-A1- 1 991 014
- EP-A1- 2 209 348
- "Long Term Evolution (LTE): A Technical Overview - Technical white paper", , 1 janvier 2007 (2007-01-01), pages 1-15, XP55005172, Extrait de l'Internet: URL:http://www.motorola.com/web/Business/S olutions/Industry Solutions/Service Providers/Wireless Operators/LTE/_Document/Static Files/6834_MotDoc_New.pdf [extrait le 2011-08-18]
- "ITU-T E.212: International operation - Maritime mobile service and public land mobile service: The internationl identification plan for public networks and subscriptions", INTERNET CITATION, 1 mai 2008 (2008-05-01), pages 1-28, XP002611801, Extrait de l'Internet: URL:http://www.itu.int/rec/T-REC-E.212-200 805-I/en [extrait le 2010-11-24]
- "LTE; General Packet Radio Service (GPRS) enhancements for Evolved Universal Terrestrial Radio Access Network (E-UTRAN) access (3GPP TS 23.401 version 9.5.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V9.5.0, 1 juin 2010 (2010-06-01), XP014047191,
- Anonymous: "Welcome to Daniel's Blogger in Google: LTE - S1-Flex Mechanism Study", , 14 June 2009 (2009-06-14), XP055442426, Retrieved from the Internet: URL:http://welcometodannysblogger.blogspot .de/2009/06/lte-s1-flex-mechanism-study.ht ml [retrieved on 2018-01-18]

## Description

La présente invention se situe dans le domaine des télécommunications et concerne plus spécifiquement un procédé d'identification d'un réseau hôte d'un terminal utilisateur parmi une pluralité de réseaux formant une infrastructure de radiocommunications. L'invention trouve une application intéressante notamment dans le cas des réseaux professionnels de radiocommunications PMR (« Professional Mobile Radiocommunications »), et plus particulièrement dans le cadre de l'utilisation des technologies de télécommunications à large bande.

De façon connue, chaque utilisateur d'un réseau public mobile de télécommunications PLMN (pour « Public Land Mobile Network » en anglais) possède actuellement un module d'identification du type carte SIM (pour « Module d'identité du souscripteur » ou « Subscriber Identity Module » en anglais) dans lequel est stocké un identifiant unique et permanent de l'utilisateur IMSI (pour « International Mobile Subscriber Identity » en anglais). La syntaxe de l'identifiant IMSI est décrite dans la norme ITU-T E.212 émise par l'ITU (pour « International Télécommunication Union » en anglais). Ce réseau public peut être un réseau cellulaire de deuxième génération du type GSM (pour « Global System for Mobile communications » en anglais) ou GPRS (pour « Global Packet Radio Service » en anglais), de troisième génération tels que les réseaux UMTS (pour « Universal Mobile Télécommunications System » en anglais), ou de quatrième génération de type LTE (pour « Long Term Evolution » en anglais) définis par la norme 3GPP (pour « 3rd Generation Partnership Project » en anglais).

L'identifiant de l'utilisateur IMSI est composé de la façon suivante :
- un code MCC (« Mobile Country Code ») de 3 chiffres correspondant à l'indicatif du pays ;
- un code MNC (« Mobile Network Code ») de 2 ou 3 chiffres correspondant à l'indicatif de l'opérateur ;
- un code MSIN (« Mobile subscriber Identification Number ») de 10 chiffres ou moins correspondant au numéro de l'abonné à l'intérieur du réseau.

L'association du code MCC et du code MNC forme un identifiant de type PLMNid ou opérateur id identifiant de manière unique le réseau hôte (« HOME » en anglais) de l'utilisateur, cet identifiant de type PLMNid étant alloué de manière statique (cf. l'ITU-T E 212 pour les réseaux de type 3GPP, l'ITU-T 218 pour les réseaux de type « trunk » (i.e. TETRA pour « Trans European Trunked Radio ») ou encore l'IEEE pour les réseaux de type Wimax). On entend par réseau hôte, le réseau d'origine auquel l'utilisateur terminal est abonné.

Ainsi, lorsqu'un terminal utilisateur muni d'un identifiant utilisateur IMSI incluant le PLMNid de son réseau hôte se trouve dans une cellule rattachée à une station de base d'un réseau de télécommunications, il peut accéder à ce dernier via son identifiant utilisateur IMSI. Il sera accepté si le PLMNid de son réseau hôte contenu dans l'identifiant utilisateur IMSI est identique au PLMNid du réseau auquel souhaite s'attacher le terminal utilisateur. Dans la négative et si aucun accord d'itinérance (« roaming » en anglais) n'existe entre le réseau hôte et le réseau visité, le terminal utilisateur sera rejeté par le réseau de télécommunications visité.

En revanche, certaines zones géographiques du territoire ne sont pas desservies par un opérateur donné en raison de la faible densité démographique, ce type de zone est usuellement dénommée zone blanche. Dans de telles zones blanches, les opérateurs n'ont en effet pas intérêt à investir dans des équipements nécessaires car l'exploitation en résultant ne serait pas rentable. A titre illustratif, en 2008, 97,7% du territoire français comportait 99,82% de la population. Les zones blanches représentaient donc 2,3% du territoire pour une population équivalente à 0, 18%.

Néanmoins, les opérateurs se sont regroupés pour acquérir et partager les équipements nécessaires afin de couvrir ces zones blanches. Ainsi, une même station de base est partagée par plusieurs opérateurs et peut actuellement être partagée par six opérateurs chaque opérateur étant identifié au moyen d'un identifiant d'opérateur de type PLMNid.

On connaît un standard de télécommunications mobile de longue portée de type LTE (pour « Long Term Evolution » en anglais) permettant de partager une station de base entre différents réseaux, chacun des réseaux appartenant à un opérateur différent. Cette mise en oeuvre est réalisée a l'aide de fonctionnalités offertes par le standard, de type 'S1-Flex' en technologie LTE ou 'Radio Acces Network sharing' en technologie 3G. En conformité avec cette technologie, chaque réseau comporte notamment :
- des moyens d'authentification et de contrôle de terminaux utilisateurs aptes à authentifier les terminaux utilisateurs appartenant au réseau de télécommunications, et
- une base de données comportant des informations relatives aux droits d'accès de terminaux utilisateurs au réseau de télécommunications, cette base de données communiquant avec les moyens d'authentification et de contrôle.

Selon une mise en oeuvre conforme à la S1-Flex, lorsqu'un terminal utilisateur se trouve pour la première fois dans une cellule rattachée à une station de base partagée par plusieurs opérateurs, un routage du terminal utilisateur vers le réseau de son opérateur est effectué au niveau de la station de base. Ce routage est effectué grâce à la valeur du PLMNid de son identifiant utilisateur IMSI.

Plus précisément, il est routé vers les moyens d'authentification et de contrôle du réseau de son opérateur hôte communiquant avec la base de données du réseau de son opérateur hôte. Ces derniers vérifient alors les droits du terminal utilisateur grâce à son identifiant MSIN.

Par ailleurs, les systèmes de radiocommunications professionnelles appelés systèmes PMR (pour « Professional Mobile Radiocommunications ») de type TETRA (« Trans European Trunked Radio ») ou TETRAPOL défini par le forum d'industriels TETRAPOL (http://www.tetrapol.com) ou encore de type P25 défini par la « Télécommunications Industry Association (TIA) » pour l' « Association of Public-Safety Communications Officers (APCO) », sont des réseaux indépendants de communication mobile dédiés à l'usage des entreprises ou des administrations, notamment pour assurer la sécurité publique, la sécurité industrielle, ou pour intervenir dans les activités de transport. Les réseaux PMR sont largement utilisés par les services de sécurité publique (gendarmerie et police nationale par exemple) et des secours, et également par bien d'autres organisations (transports publics, aéroports,...). Ce sont des réseaux privés qui présentent un haut niveau de sécurité. Les réseaux PMR actuels, basés sur les technologies citées ci-dessus, sont des réseaux dits à bande étroite, caractérisés par une largeur de canal de l'ordre d'une dizaine de kilohertz (kHz).

L'évolution des réseaux de télécommunications et la montée du haut débit incitent les utilisateurs de systèmes PMR à demander des applications toujours plus évoluées, nécessitant une bande passante plus importante. Dès lors, il est important de pouvoir faire évoluer les systèmes PMR vers de plus hauts débits en large bande, par exemple en mettant en oeuvre une technologie à bande large (par exemple de type LTE ("Long Term Evolution" en anglais) ou WiMAX (Worldwide Interoperability for Microwave Access)); de tels systèmes devront en conséquence répondre à un système d'identification défini selon la norme ITU-T E.212. Il s'ensuit qu'un identifiant IMSI incluant le PLMNid du réseau de l'utilisateur doit être attribué à chaque utilisateur d'un réseau PMR.

Plus particulièrement, pour être identifiable, un utilisateur de réseau PMR doit posséder un identifiant permettant de lui attribuer d'une part, une zone géographique, comme par exemple une commune pour la France, et d'autre part, une organisation, comme par exemple la police, les pompiers ou la gendarmerie.

Dans le cas des réseaux PMR ou privés, l'identifiant PLMNid du réseau de l'utilisateur contenu dans l'identifiant utilisateur IMSI est composé de la façon suivante :
- le code MCC correspond à l'indicatif du pays, et
- le code MNC correspond à l'indicatif de l'organisation (nationale ou régionale pour une région déterminée, selon la politique locale au pays comme un état Américain, par exemple) à laquelle appartient le terminal utilisateur.

Une telle réalisation pose cependant certaines difficultés. En effet, la quantité importante d'organisations nécessite l'utilisation d'un nombre important de PLMNid.

En outre, en conformité avec la mise en oeuvre du standard S1-Flex, comme une station de base ne peut supporter qu'un nombre réduit d'identifiants réseau de type PLMNid (maximum 6 identifiants sur le standard actuel), un partage d'une même station de base entre différentes organisations de façon à couvrir une même zone géographique ne permettrait pas de couvrir toutes les organisations. En conséquence, pour couvrir une même zone géographique par toutes les organisations, il est nécessaire d'utiliser plusieurs stations de base. Cette obligation engendre un coût d'installation d'infrastructure et d'opérations important pour les utilisateurs. Le coût est d'autant plus important que les utilisateurs de réseaux PMR ou privés sont beaucoup moins nombreux que les utilisateurs de réseaux publics.

Dans ce contexte, l'invention vise à proposer un procédé d'identification d'un réseau de radiocommunications hôte d'un terminal utilisateur parmi une pluralité de réseaux utilisant une infrastructure d'accès radio, telle qu'une station de base, commune et partagée permettant de réduire le nombre d'identifiants réseau nécessaires (par exemple de type PLMNid selon la norme ITU-T E.212).

A cette fin, l'invention porte sur un procédé (revendiqué dans la revendication indépendante 1) d'identification d'un réseau de radiocommunications de type hôte d'un terminal utilisateur parmi au moins deux réseaux formant une infrastructure (revendiquée dans la revendication indépendante 11) de radiocommunications qui comporte :
- une station de base partagée par les au moins deux réseaux, ladite station de base étant apte à :
   - assurer la transmission et la réception radio avec ledit terminal utilisateur se trouvant dans une cellule rattachée à ladite station de base, et
   - router des données entre ledit terminal utilisateur et chacun desdits au moins deux réseaux,
- un coeur de réseau pour chacun desdits réseaux, chaque coeur de réseau comportant :
   - des moyens d'authentification et de contrôle de terminaux utilisateurs, et
   - une base de données comportant des informations relatives aux droits d'accès de terminaux utilisateurs à un desdits réseaux,
chaque terminal utilisateur possédant un code d'identification unique d'utilisateur comportant :
- un premier code identificateur réseau, et
- un deuxième code d'identification d'utilisateur du réseau hôte, ledit procédé étant caractérisé en ce que lorsque ledit terminal utilisateur se trouve dans une cellule et que ledit terminal utilisateur transmet pour la première fois une demande d'attachement à un desdits réseaux au moyen de son code d'identification unique, ledit procédé comporte les étapes suivantes :
   - vérifier les droits d'accès dudit terminal utilisateur à ladite infrastructure de radiocommunications en fonction dudit premier code identificateur réseau,
   - pré-décoder ledit deuxième code pour identifier le réseau hôte dudit terminal utilisateur et router la demande d'attachement dudit terminal utilisateur vers des moyens d'authentification et de contrôle du réseau hôte identifié qui sont aptes à authentifier ledit terminal utilisateur.

Grâce à l'invention, un unique identifiant réseau PLMNid (ou premier code identificateur réseau), permet d'être attribué à des utilisateurs appartenant à des organisations différentes. Cette particularité permet de diminuer le nombre de stations de base nécessaires pour couvrir une zone géographique déterminée pour une pluralité d'organisations. Avantageusement, le coût des équipements et des opérations sont divisés entre cette pluralité d'organisations.

A titre d'exemple, chacun des codes d'identification d'utilisateur des terminaux utilisateurs des organisations de la police, de la gendarmerie et des pompiers possède un même code d'identification réseau de type PLMNid permettant aux policiers de s'attacher à un premier réseau via une première station de base, aux gendarmes de s'attacher à un second réseau via ladite première station de base et aux pompiers de s'attacher à un troisième réseau via ladite première station de base.

Le procédé selon l'invention peut également présenter une ou plusieurs des caractéristiques ci-dessous, considérées individuellement ou selon toutes les combinaisons techniquement possibles :
- ledit deuxième code d'identification d'utilisateur du réseau hôte comporte :
   - un code d'identification d'une organisation du réseau hôte,
   - un code d'identification d'utilisateur au sein de l'organisation du réseau hôte ;
- l'étape de pré-décodage est réalisée au moyen dudit code d'identification d'une organisation ;
- l'étape de pré-décodage et de routage est réalisée dans la station de base ;
- l'étape de pré-décodage et de routage est réalisée par des moyens d'authentification et de contrôle spécifiques ;
- l'étape de pré-décodage est réalisé dans une base de données spécifique communiquant avec des moyens d'authentification et de contrôle spécifiques qui routent la demande d'attachement vers les moyens d'authentification et de contrôle du réseau hôte identifié ;
- le procédé comporte une étape d'authentification dudit terminal utilisateur par des moyens d'authentification et de contrôle dudit réseau hôte identifié et une base de données dudit réseau hôte identifié, ladite étape d'authentification étant réalisée au moyen :
   - dudit code d'identification unique, ou
   - dudit deuxième code d'identification d'utilisateur du réseau hôte, ou
   - dudit code d'identification d'utilisateur au sein de l'organisation du réseau hôte ;
- après l'authentification dudit terminal utilisateur le procédé comporte une étape d'attribution d'un code d'identification temporaire au dit terminal utilisateur, ledit code d'identification temporaire étant attribué au dit terminal utilisateur par lesdits moyens d'authentification et de contrôle dudit réseau hôte ;
- ledit code identification temporaire est conforme à une syntaxe de type T-IMSI ;
- ledit premier code identificateur réseau est conforme à une syntaxe de type PLMNid ;
- chacun desdits réseaux de radiocommunications peut être de type privé ou public ;
- chaque réseau de radiocommunications est conforme à un standard de radiocommunications mobile de longue portée de type 3G, LTE ou Wlmax.

L'invention porte en outre sur une infrastructure de radiocommunications formée par au moins deux réseaux, chacun desdits deux réseaux étant géré par une organisation différente, ladite infrastructure comportant au moins une station de base partagée entre lesdits au moins deux réseaux, et un coeur de réseau pour chacun desdits réseaux, chaque coeur de réseau comportant :
- des moyens d'authentification et de contrôle de terminaux utilisateurs ;
- une base de données comportant des informations relatives aux droits d'accès de terminaux utilisateurs à un desdits réseaux de radiocommunications,
ladite infrastructure étant caractérisée en ce qu'elle est apte à mettre en oeuvre le procédé de l'invention. De surcroît, chaque organisation peut être une organisation publique ou une organisation privée.

Dans une réalisation avantageuse de l'infrastructure, la station de base gère plusieurs codes identificateur réseau différents, chacun pouvant identifier une pluralité de coeur de réseaux de radiocommunications différents.

Dans une autre réalisation avantageuse de l'infrastructure, plusieurs stations de base gèrent un même code identificateur réseau identifiant pour chaque station de base une pluralité différente de coeurs de réseau de radiocommunications.

L'invention porte également sur un programme d'ordinateur comportant une ou plusieurs séquences d'instructions exécutables par une unité de traitement d'information, l'exécution desdites séquences d'instructions permettant une mise en oeuvre du procédé de l'invention, lorsqu'il est chargé sur un ordinateur.

D'autres caractéristiques et avantages du procédé selon l'invention ressortiront clairement de la description qui en est donnée ci-après, à titre indicatif et nullement limitatif, en référence aux figures annexées ci-jointes, parmi lesquelles :
- la figure 1 représente une infrastructure de radiocommunications partagée par deux réseaux de radiocommunications ;
- la figure 2 illustre les étapes d'un procédé d'identification d'un réseau de radiocommunications de type hôte conforme à l'invention.

Pour des raisons de clarté, seuls les éléments essentiels pour la compréhension de l'invention ont été représentés, et ceci sans respect de l'échelle et de manière schématique.

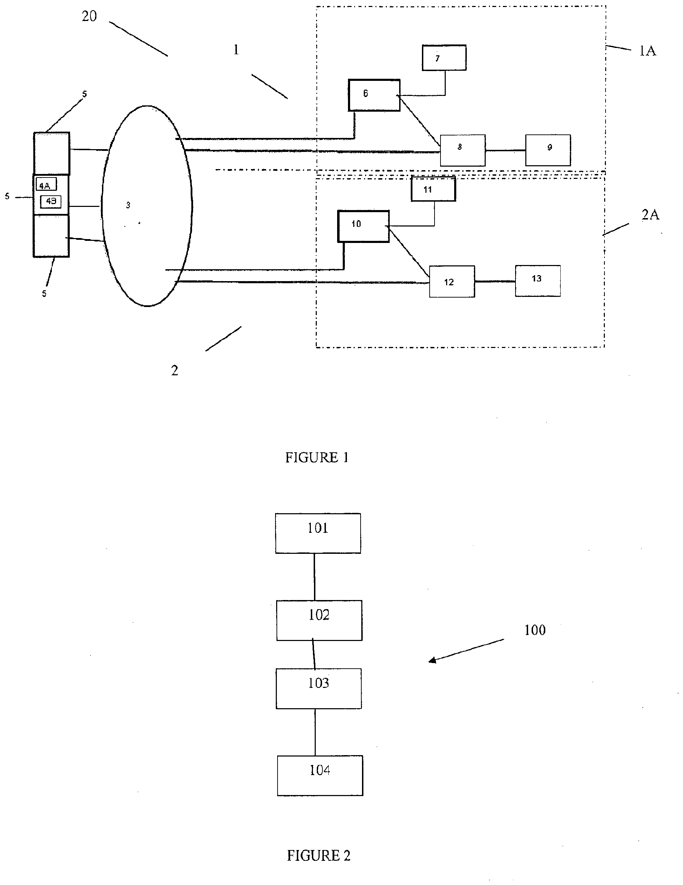

La figure 1 représente une infrastructure de radiocommunications 20 selon l'invention comportant un premier réseau de radiocommunications 1 et un deuxième réseau de radiocommunications 2. A titre purement illustratif, les moyens décrits dans ce mode de réalisation font référence à la terminologie utilisée dans une technologie de type LTE. Il est entendu que l'infrastructure de ces réseaux n'est aucunement limitée à un tel standard de radiocommunications et peut s'appliquer à tout type de standard de radiocommunications à large bande, par exemple la technologie 3G.

En outre, la figure 1 représente une station de base 3 apte à assurer la transmission et la réception radio avec des terminaux utilisateurs 4A et 4B se trouvant dans une des cellules 5 rattachées à la station de base 3. De surcroît, il convient de noter que la station de base 3 est partagée par le premier réseau 1 et le deuxième réseau 2. Ainsi, la station de base 3 est apte à router des données entre les terminaux utilisateurs 4A et 4B et chacun des premier et deuxième réseaux 1 et 2. La station de base 3 est par exemple une entité eNodeB en technologie LTE.

En outre, chaque terminal utilisateur 4A ou 4B possède un code d'identification unique C1 d'utilisateur de type IMSI (pour « International Mobile Subscriber Identity » en anglais) comportant :
- un premier code C2 identificateur réseau de type PLMNid, et
- un deuxième code C3 d'identification d'utilisateur du réseau hôte de type MSIN.

Le premier code C2 identificateur réseau du terminal utilisateur 4A ou 4B est commun pour une pluralité de réseaux de façon à permettre le partage de la station de base 3 par une pluralité de réseaux 1 et 2. Cette particularité permet avantageusement de minimiser les identifiants réseau de type PLMNid nécessaires.

Le deuxième code C3 d'identification d'utilisateur du réseau hôte comporte en outre :
- un code d'identification d'une organisation C4 du réseau hôte ORGid (pour « ORGanisation id » en anglais), et
- un code d'identification d'utilisateur C5 au sein de l'organisation du réseau hôte.

Par ailleurs, le deuxième code C3 d'identification d'utilisateur du réseau hôte peut être implémenté :
- sous forme de deux codes dont un est dédié à la l'organisation et un deuxième est dédié à l'utilisateur, ou
- sous forme de plages de numérotation, par exemple une première plage de 0 à 1000 est dédiée aux utilisateurs de l'organisation des pompiers et une deuxième plage de 1001 à 2000 est dédiée aux utilisateurs de l'organisation des policiers, ou
- en combinant un code propre et une plage de numérotation.

Le premier réseau 1 est formé par la station de base 3 et un premier coeur de réseau 1A comportant :
- des moyens d'authentification et de contrôle 6 des terminaux utilisateurs aptes à authentifier les terminaux 4A des utilisateurs abonnés au premier réseau 1 ; les moyens d'authentification et de contrôle 6 sont par exemple une entité MME « Mobility Management Entity » en technologie LTE ;
- une base de données 7 comportant des informations relatives au droit d'accès de terminaux utilisateurs 4A au premier réseau 1; en technologie LTE cette base de données 7 peut être formée par un serveur HSS « Home Subscriber Server » ;
- une passerelle de distribution 8 assurant la réception et l'émission radio avec la station de base 3; la passerelle de distribution 8 est par exemple une entité S-GW « Serving Gateway » en technologie LTE ;
- des moyens de rattachement 9 à un réseau de paquets (typiquement un réseau IP) tels qu'une entité PDN-GW « Packet Data Network Gateway » en technologie LTE; l'entité PDN-GW forme un point d'ancrage vers le réseau IP («Internet Protocol» en anglais) ; on notera qu'il est possible d'avoir plusieurs PDN-GW selon le type de données à transmettre.

Le deuxième réseau 2 est formé par la station de base 3 et un deuxième coeur de réseau 2A comportant :
- des moyens d'authentification et de contrôle 10 des terminaux utilisateurs aptes à authentifier les terminaux 4B des utilisateurs abonnés au deuxième réseau 2 ; les moyens d'authentification et de contrôle 10 sont par exemple une entité MME « Mobility Management Entity » en technologie LTE ;
- une base de données 11 comportant des informations relatives au droit d'accès de terminaux utilisateurs 4B au deuxième réseau 2 ; en technologie LTE cette base de données 11 peut être formée par un serveur HSS « Home Subscriber Server » ;
- une passerelle de distribution 12 assurant la réception et l'émission radio avec la station de base 3; la passerelle de distribution 12 est par exemple une entité S-GW « Serving Gateway » en technologie LTE ;
- des moyens de rattachement 13 à un réseau de paquets (typiquement un réseau IP) tels qu'une entité PDN-GW « Packet Data Network Gateway » en technologie LTE; l'entité PDN-GW forme un point d'ancrage vers le réseau IP (« Internet Protocol » en anglais) ; on notera qu'il est possible d'avoir plusieurs PDN-GW selon le type de données à transmettre.

Selon une variante, les bases de données 7 et 11 respectivement des deux réseaux 1 et 2 sont distinctes mais comportent toutes les deux des informations relatives aux droits d'accès des terminaux utilisateurs 4A et 4B

Selon une autre variante, les bases de données 7 et 11 respectivement des deux réseaux 1 et 2 sont une même et unique base de données dédiée aux deux réseaux 1 et 2 qui comporte des informations relatives aux droits d'accès des terminaux utilisateurs 4A et 4B respectivement des deux réseaux 1 et 2.

Le premier réseau 1 et le deuxième réseau 2 possèdent le même code identificateur réseau de type PLMNid. L'infrastructure de radiocommunications de l'invention peut comporter plus de deux réseaux de radiocommunications identifiés par un même code identificateur réseau, tous les réseaux identifiés par un même code identificateur réseau partageant la même station de base.

En outre la station de base peut gérer plusieurs codes identificateur réseau différents, chacun pouvant identifier une pluralité de coeur réseaux de radiocommunications différents.

Plusieurs stations de base peuvent gérer un même code identificateur réseau identifiant pour chaque station de base une pluralité différente de coeurs de réseau de radiocommunications.

La figure 2 illustre les étapes du procédé 100 d'identification d'un réseau de radiocommunications de type hôte d'un terminal utilisateur 4A, 4B parmi au moins deux réseaux 1, 2 partageant une infrastructure de radiocommunications 20.

Pour illustrer le procédé 100, on considère de façon non limitative que :
- le terminal 4A est abonné au réseau de radiocommunications de l'organisation des pompiers formé par le premier réseau 1, et
- le terminal 4B est abonné au réseau professionnel de radiocommunications de l'organisation de la police formé par le deuxième réseau 2.

Ainsi, lorsque le terminal utilisateur 4A se trouve pour la première fois dans une des cellules 5 rattachées à la station de base 3 et qu'il est muni d'un premier code C2 identificateur réseau identique à un code d'identification réseau commun au premier réseau 1 et au deuxième réseau 2, le terminal utilisateur 4A peut réaliser une première demande d'attachement à l'infrastructure de radiocommunications 20 via la station de base 3. Pour ce faire, le procédé 100 comporte une première étape de vérification 101 consistant à vérifier les droits d'accès du terminal 4A à l'infrastructure 20. Cette vérification 101 est réalisée au moyen du premier code C2 identificateur réseau. Plus particulièrement, si le premier code C2 identificateur réseau détenu par le terminal utilisateur 4A est différent du code identificateur réseau commun au premier réseau 1 et au deuxième réseau 2 alors la première demande d'attachement à l'infrastructure 20 sera soit rejetée, soit gérée via des procédures d'itinérance (« Roaming » en anglais) si des accords avec le premier réseau 1 et le deuxième réseau 2 le permettent.

A contrario, si le premier code C2 identificateur réseau détenu par le terminal utilisateur 4A est identique au code identificateur réseau commun au premier réseau 1 et au deuxième réseau 2, cela signifie que le terminal utilisateur 4A appartient à l'un des réseaux 1 ou 2 de l'infrastructure radio 20. Il sera alors accepté par l'infrastructure 20 mais pas encore authentifié.

Il est en général du ressort de la station de base 3 de gérer cette première vérification 101.

Lorsque le terminal utilisateur 4A réalise une première demande d'attachement auprès de l'infrastructure de radiocommunications 20 en transmettant à la station de base 3 le premier code d'identification unique C1, une deuxième étape de pré-décodage 102 du deuxième code C3 est réalisée de façon à identifier le réseau hôte du terminal utilisateur et à router le code d'identification unique C1 du terminal utilisateur 4A vers des moyens d'authentification et de contrôle 6 du réseau hôte identifié qui sont aptes à authentifier complètement le terminal utilisateur 4A. Dans notre exemple, ces moyens d'authentification et de contrôle sont formés par les moyens d'authentification et de contrôle 6 du réseau hôte 1 (formé par le premier réseau) du terminal utilisateur 4A. Ce pré-décodage 102 est effectué au moyen du deuxième code C3 d'identification d'utilisateur du réseau hôte et plus particulièrement au moyen du code d'identification d'une organisation C4 du réseau hôte. Comme le terminal utilisateur 4A fait partie de l'organisation des pompiers, il est routé vers les moyens d'authentification et de contrôle 6 du réseau hôte 1 (ou premier réseau 1). En ce qui concerne le terminal utilisateur 4B qui fait partie de l'organisation de la police, lors de son premier attachement, il sera routé vers les moyens d'authentification et de contrôle 10 du réseau hôte 2 (ou deuxième réseau 2) qui est le réseau de la police. Il convient de souligner que cette séparation entre le premier réseau 1 et le deuxième réseau 2 est effectuée à partir du deuxième code C3 d'identification d'utilisateur du réseau hôte de type MSIN et non du premier code C2 d'identification réseau de type PLMNid. Ceci permet de limiter les codes d'identification réseau de type PLMNid qui sont utilisés pour différentes organisations.

De façon non limitative, ce pré-décodage 102 peut être effectué de trois réalisations différentes.

Selon une première réalisation, l'étape de pré-décodage et de routage 102 est effectuée dans la station de base 3. En d'autres termes, la séparation entre le premier réseau 1 et le deuxième réseau 2 est effectuée au niveau de la station de base 3. Pour ce faire, la station de base 3 comporte une logique de décodage du code d'identification d'une organisation C4 pour identifier le réseau hôte du terminal utilisateur et une logique de routage de la demande d'attachement du terminal vers le réseau hôte identifié. Dans cette réalisation, la station de base 3 effectue la première étape de vérification 101 et la deuxième étape de pré-décodage et de routage102. La station de base 3 fournit donc la demande d'attachement aux moyens d'authentification et de contrôle du réseau hôte identifié.

Selon une deuxième réalisation, l'étape de pré-décodage et de routage 102 est effectuée dans des moyens d'authentification et de contrôle spécifiques pour l'identification du réseau hôte du terminal ayant fait une demande de rattachement. Les moyens d'authentification et de contrôle spécifiques comportent une logique de décodage du code d'identification d'une organisation C4 pour identifier le réseau hôte et une logique de routage de la demande de rattachement du terminal vers le réseau hôte identifié. Les moyens d'authentification et de contrôle spécifiques peuvent être des moyens d'authentification et de contrôle d'un des réseaux de l'infrastructure de radiocommunications sélectionnés par défaut. En variante, les moyens d'authentification et de contrôle spécifiques peuvent être des moyens d'authentification et de contrôle centralisés partagés par tous les réseaux de l'infrastructure.

Selon une troisième réalisation, le pré-décodage 102 est effectué dans une base de données spécifique pour l'identification du réseau hôte du terminal ayant fait une demande de rattachement. La base de données spécifique reçoit le code C1 depuis la station de base 3 et par l'intermédiaire des moyens d'authentification et de contrôle qui sont soit centralisés dans l'infrastructure soit sélectionnés par défaut par l'infrastructure mais qui ne gèrent pas l'étape de pré-décodage 102. La base de données spécifique peut être une base de données centralisée dans l'infrastructure de radiocommunications. Selon une autre variante la base de données spécifique peut être une base de données sélectionnée par défaut par l'infrastructure de radiocommunications. La base de données spécifique comporte une logique de décodage du code d'identification d'une organisation C4 pour identifier le réseau hôte et pour notifier aux moyens d'authentification et de contrôle associées à la base de données le bon routage de la demande d'attachement à effectuer vers les moyens d'authentification et de contrôle du réseau hôte identifié.

Une fois que le deuxième code C3 est pré-décodé, le procédé 100 réalise une étape d'authentification 103 du terminal utilisateur 4A. Cette étape 103 est effectuée, dans le réseau hôte identifié à l'étape de pré-décodage et de routage 102,. Plus particulièrement l'étape 103 est exécutée par les moyens d'authentification et de contrôle du réseau hôte associés à la base de données du réseau hôte, en fonction:
- du code complet d'identification unique C1 d'utilisateur, ou
- du deuxième code C3 d'identification d'utilisateur du réseau hôte formé par le code d'identification d'une organisation C4 du réseau hôte et le code d'identification d'utilisateur C5 au sein de l'organisation du réseau hôte.

Cette authentification 103 est réalisée par correspondance du code complet d'identification unique C1 ou du deuxième code C3 du terminal utilisateur ou encore du code d'identification d'utilisateur au sein de l'organisation du réseau hôte C5 avec respectivement les codes d'identification unique C1, les deuxièmes codes C3, ou les codes d'identification d'utilisateur C5 qui sont mémorisés dans la base de données du réseau hôte identifié.

Si l'authentification 103 est validée, les moyens d'authentification et de contrôle du réseau hôte attribuent lors d'une étape 104 un code d'identification temporaire d'accès au réseau hôte au terminal utilisateur permettant d'identifier l'utilisateur du terminal 4A lors d'un accès ultérieur à l'infrastructure 20 selon l'invention. Ainsi, lorsque le terminal utilisateur 4A passe d'un mode IDLE (ou mode veille) à un mode actif au cours duquel le terminal utilisateur 4A demande des ressources, le code d'identification temporaire (de type T-IMSI) permet à la station de base 3 ou à toute autre station de base de l'infrastructure 20, de router la demande de communication du terminal utilisateur 4A directement vers les moyens d'authentification et de contrôle (MME) du coeur de réseau du réseau hôte. Ceci est possible car le code d'identification temporaire T-IMSI comporte intrinsèquement l'adresse des moyens d'authentification et de contrôle du réseau hôte.

L'invention concerne également une infrastructure 20 de radiocommunications conforme à celle illustrée sur la figure 1. Cette infrastructure 20 est partagée entre le premier réseau 1 et le deuxième réseau 2, chacun des deux réseaux 1 et 2 étant géré par une organisation différente.

L'infrastructure 20 comporte une station de base 3 partagée entre le premier réseau 1 et le deuxième réseau 2. Le premier réseau 1 comporte un premier coeur de réseau 1A tel que décrit précédemment et le deuxième réseau 2 comporte un deuxième coeur de réseau 2A tel que décrit précédemment.

L'infrastructure 20 peut comporter plus de deux réseaux de radiocommunications.

L'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention. Le programme peut être téléchargé dans la station de base via un réseau de communication, comme internet.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy dise) ou un disque dur.

L'invention trouve une application dans tous les types de réseaux de radiocommunications et trouve une application particulièrement intéressante dans le cas des réseaux professionnels de radiocommunications de type Privés ou Publics ou mixte Privé/Public.

Elle trouve une application particulière lorsqu'il est nécessaire de partager l'infrastructure, c'est-à-dire lorsqu'une multitude de réseaux de radiocommunications de taille réduite doivent 'partager' les mêmes stations de base et un même PLMNID, ou encore lorsque le nombre de PLMNIDs est limité.

## Revendications

1. Procédé (100) d'identification d'un réseau de radiocommunications de type hôte d'un terminal utilisateur (4A, 4B) parmi au moins deux réseaux (1, 2) formant une infrastructure de radiocommunications (20) qui comporte :
- une station de base (3) partagée par les au moins deux réseaux (1, 2), ladite station de base (3) étant apte à :
- assurer la transmission et la réception radio avec ledit terminal utilisateur (4A, 4B) se trouvant dans une cellule (5) rattachée à ladite station de base (3), et
- router des données entre ledit terminal utilisateur (4A, 4B) et chacun desdits au moins deux réseaux (1, 2),
- un coeur de réseau (1A, 2A) pour chacun desdits réseaux (1, 2), chaque coeur de réseau (1A, 2A) comportant :
- des moyens d'authentification et de contrôle (6, 10) de terminaux utilisateurs (4A, 4B), et
- une base de données (7, 11) comportant des informations relatives aux droits d'accès de terminaux utilisateurs (4A, 4B) à un desdits réseaux (1, 2),
chaque terminal utilisateur (4A, 4B) possédant un code d'identification unique (C1) d'utilisateur comportant :
- un premier code (C2) identificateur réseau, et
- un deuxième code (C3) d'identification d'utilisateur du réseau hôte,
ledit procédé étant **caractérisé en ce que** lorsque ledit terminal utilisateur (4A, 4B) se trouve dans une cellule (5) et que ledit terminal utilisateur (4A, 4B) transmet pour la première fois une demande d'attachement à un desdits réseaux (1, 2) au moyen de son code d'identification unique (C1), ledit procédé comporte les étapes suivantes :
- vérifier (101) les droits d'accès dudit terminal utilisateur (4A, 4B) à ladite infrastructure de radiocommunications (20) en fonction dudit premier code identificateur réseau (C2), ledit premier code identificateur réseau (C2) étant commun pour lesdits au moins deux réseaux (1, 2),
- selon une étape (102) dite de pré-décodage et de routage, identifier le réseau hôte dudit terminal utilisateur (4A, 4B) au moyen dudit deuxième code (C3) et router la demande d'attachement dudit terminal utilisateur (4A, 4B) vers des moyens d'authentification et de contrôle (6, 10) du réseau hôte identifié qui sont aptes à authentifier ledit terminal utilisateur (4A, 4B).

2. Procédé (100) selon la revendication 1 **caractérisé en ce que** ledit deuxième code (C3) d'identification d'utilisateur du réseau hôte comporte :
- un code d'identification d'une organisation (C4) du réseau hôte;
- un code d'identification d'utilisateur (C5) au sein de l'organisation du réseau hôte.

3. Procédé (100) selon la revendication 2 **caractérisé en ce que** l'étape de pré-décodage (102) est réalisée au moyen dudit code d'identification d'une organisation (C4).

4. Procédé (100) selon l'une des revendications précédentes **caractérisé en ce que** l'étape (102) de pré-décodage et de routage est réalisée dans la station de base (3).

5. Procédé (100) selon l'une des revendications 1 à 3 **caractérisé en ce que** l'étape de pré-décodage et de routage (102) est réalisée par des moyens d'authentification et de contrôle (6, 10) spécifiques.

6. Procédé (100) selon l'une des revendications 1 à 3 **caractérisé en ce que** l'étape de pré-décodage (102) est réalisé dans une base de données (7, 11) spécifique communiquant avec des moyens d'authentification et de contrôle (6, 10) spécifiques qui routent la demande d'attachement vers les moyens d'authentification et de contrôle du réseau hôte identifié.

7. Procédé (100) selon l'une des revendications 2 à 6 **caractérisé en ce qu'**il comporte une étape d'authentification (103) dudit terminal utilisateur (4A, 4B) par des moyens d'authentification et de contrôle (6, 10) dudit réseau hôte identifié et une base de données (7, 11) dudit réseau hôte identifié, ladite étape d'authentification (103) étant réalisée au moyen :
- dudit code d'identification unique (C1), ou
- dudit deuxième code (C3) d'identification d'utilisateur du réseau hôte, ou
- dudit code d'identification d'utilisateur (C5) au sein de l'organisation du réseau hôte.

8. Procédé (100) selon l'une des revendications précédentes **caractérisé en ce qu'**après l'authentification dudit terminal utilisateur (4A, 4B) le procédé (100) comporte une étape d'attribution (104) d'un code d'identification temporaire au dit terminal utilisateur (4A, 4B), ledit code d'identification temporaire étant attribué au dit terminal utilisateur (4A, 4B) par lesdits moyens d'authentification et de contrôle (6, 10) dudit réseau hôte.

9. Procédé (100) selon la revendication 8 **caractérisé en ce que** ledit code identification temporaire est conforme à une syntaxe de type T-IMSI.

10. Procédé (100) selon l'une des revendications précédentes **caractérisé en ce que** ledit premier code (C2) identificateur réseau est conforme à une syntaxe de type PLMNid.

11. Infrastructure (20) de radiocommunications formée par au moins deux réseaux (1, 2) pour identifier un réseau de radiocommunications de type hôte d'un terminal utilisateur (4A, 4B) parmi lesdits au moins deux réseaux (1, 2), ladite infrastructure (20) comportant au moins une station de base (3) partagée entre lesdits au moins deux réseaux (1, 2), et un coeur de réseau (1A, 2A) pour chacun desdits réseaux (1, 2), chaque coeur de réseau (1A, 2A) comportant :
- des moyens d'authentification et de contrôle (6, 10) de terminaux utilisateurs (4A, 4B) ;
- une base de données (7, 11) comportant des informations relatives aux droits d'accès de terminaux utilisateurs (4A, 4B) à un desdits réseaux de radiocommunications (1, 2),
chaque terminal utilisateur (4A, 4B) possédant un code d'identification unique (C1) d'utilisateur comportant :
- un premier code (C2) identificateur réseau, et
- un deuxième code (C3) d'identification d'utilisateur du réseau hôte,
ladite infrastructure (20) étant **caractérisée en ce que** lorsque ledit terminal utilisateur (4A, 4B) se trouve dans une cellule (5) et que ledit terminal utilisateur (4A, 4B) transmet pour la première fois une demande d'attachement à un desdits réseaux (1, 2) au moyen de son code d'identification unique (C1), ladite infrastructure (20) est apte à :
- vérifier (101) les droits d'accès dudit terminal utilisateur (4A, 4B) à ladite infrastructure de radiocommunications (20) en fonction dudit premier code identificateur réseau (C2), ledit premier code identificateur réseau (C2) étant commun pour lesdits au moins deux réseaux (1, 2),
- selon une étape (102) dite de pré-décodage et de routage, identifier le réseau hôte dudit terminal utilisateur (4A, 4B) au moyen dudit deuxième code (C3) et router la demande d'attachement dudit terminal utilisateur (4A, 4B) vers des moyens d'authentification et de contrôle (6, 10) du réseau hôte identifié qui sont aptes à authentifier ledit terminal utilisateur (4A, 4B).

12. Infrastructure (20) de radiocommunications selon la revendication 11 **caractérisée en ce que** chaque organisation est une organisation publique ou une organisation privée.

13. Infrastructure (20) de radiocommunications selon la revendication 11 ou 12 **caractérisée en ce que** la station de base (3) gère plusieurs codes identificateur réseau différents, chacun pouvant identifier une pluralité de coeur de réseaux (1A, 2A) de radiocommunications différents.

14. Infrastructure (20) de radiocommunications selon l'une des revendications 11 à 13 **caractérisée en ce que** plusieurs stations de base (3) gèrent un même code identificateur réseau identifiant pour chaque station de base (3) une pluralité différente de coeurs de réseau (1A, 2A) de radiocommunications.

15. Programme d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 10, lorsqu'il est chargé sur un ordinateur.

## Patentansprüche

1. Identifizierungsverfahren (100) eines Funkkommunikationsnetzes vom Typ Host eines Benutzerterminals (4A, 4B) aus wenigstens zwei Netzen (1, 2), die eine Funkkommunikations-Infrastruktur (20) bilden, die umfasst:
- eine Basisstation (3), die durch die wenigstens zwei Netze (1, 2) geteilt ist, wobei die genannte Basisstation (3) geeignet ist, um:
∘ die Funk-Übertragung und den -Empfang mit dem genannten Benutzerterminal (4A, 4B) zu gewährleisten, das sich in einer Zelle (5) befindet, die der genannten Basisstation (3) zugeordnet ist, und
∘ Daten zwischen dem genannten Benutzerterminal (4A, 4B) und jedem der genannten wenigstens zwei Netze (1, 2) zu routen,
- einen Netzkern (1A, 2A) für jedes der genannten Netze (1, 2), wobei jeder Netzkern (1A, 2A) umfasst:
∘ Authentifizierungs- und Kontrollmittel (6, 10) von Benutzerterminals (4A, 4B) und
∘ eine Datenbank (7, 11), umfassend Informationen über die Zugangsrechte für Benutzerterminals (4A, 4B) zu einem der genannten Netze (1, 2),
wobei jedes Benutzerterminal (4A, 4B) einen einzigartigen Benutzer-Identifizierungscode (C1) besitzt, umfassend:
- einen ersten Netz-Identifizierungscode (C2) und
- einen zweiten Benutzer-Identifizierungscode (C3) des Hostnetzes, wobei das genannte Verfahren **dadurch gekennzeichnet ist, dass**, wenn das genannte Benutzerterminal (4A, 4B) sich in einer Zelle (5) befindet und das genannte Benutzerterminal (4A, 4B) zum ersten Mal eine Zuordnungsanfrage an eines der genannten Netze (1, 2) mittels seines einzigartigen Identifizierungscodes (C1) überträgt, das genannte Verfahren die folgenden Schritte umfasst:
- überprüfen (101) der Zugangsrechte des genannten Benutzerterminals (4A, 4B) für die genannte Funkkommunikations-Infrastruktur (20) in Abhängigkeit von dem genannten ersten Netz-Identifizierungscode (C2), wobei der genannte erste Netz-Identifizierungscode (C2) für die genannten wenigstens zwei Netze (1, 2) gemeinsam ist,
- gemäß einem als Vordekodierung und Routen bezeichneten Schritt (102) das Host-Netz des genannten Terminalbenutzers (4A, 4B) mittels des genannten zweiten Codes (C3) identifizieren und die Zuordnungsanfrage des genannten Benutzerterminals (4A, 4B) zu Authentifizierungs- und Kontrollmitteln (6, 10) des identifizierten Hostnetzes steuern, die geeignet sind, das genannte Nutzerterminal (4A, 4B) zu authentifizieren.

2. Verfahren (100) gemäß Anspruch 1, **dadurch gekennzeichnet, dass** der genannte zweite Benutzer-Identifizierungscode (C3) des Hostnetzes umfasst:
∘ einen Identifizierungscode einer Organisation (C4) des Hostnetzes;
∘ einen Benutzer-Identifizierungscode (C5) innerhalb der Organisation des Hostnetzes.

3. Verfahren (100) gemäß Anspruch 2, **dadurch gekennzeichnet, dass** der Vordekodierungs-Schritt (102) mittels des genannten Identifizierungscodes einer Organisation (C4) realisiert ist.

4. Verfahren (100) gemäß einem der voranstehenden Ansprüche, **dadurch gekennzeichnet, dass** der Vordekodierungs- und Routen-Schritt (102) in der Basisstation (3) realisiert ist.

5. Verfahren (100) gemäß einem der Ansprüche 1 bis 3, **dadurch gekennzeichnet, dass** der Vordekodierungs- und Routen-Schritt (102) durch spezifische Authentifizierungs- und Kontrollmittel (6, 10) realisiert ist.

6. Verfahren (100) gemäß einem der Ansprüche 1 bis 3, **dadurch gekennzeichnet, dass** der Vordekodierungs-Schritt (102) in einer spezifischen Datenbank (7, 11) realisiert ist, die mit spezifischen Authentifizierungs- und Kontrollmitteln (6, 10) kommuniziert, die die Zuordnungsanfrage zu den Authentifizierungs- und Kontrollmitteln des identifizierten Hostnetzes routen.

7. Verfahren (100) gemäß einem der Ansprüche 2 bis 6, **dadurch gekennzeichnet, dass** es einen Authentifizierungsschritt (103) des genannten Benutzerterminals (4A, 4B) durch Authentifizierungs- und Kontrollmittel (6, 10) des genannten identifizierten Hostnetzes und eine Datenbank (7, 11) des genannten nicht identifizierten Netzes umfasst, wobei der genannte Authentifizierungsschritt (103) realisiert ist mittels:
∘ des genannten einzigartigen Identifizierungscodes (C1) oder
∘ des genannten zweiten Benutzer-Identifizierungscodes (C3) des Hostnetzes oder
∘ des genannten Benutzer-Identifizierungscodes (C5) innerhalb der Organisation des Hostnetzes.

8. Verfahren (100) gemäß einem der voranstehenden Ansprüche, **dadurch gekennzeichnet, dass** das Verfahren (100) nach der Authentifizierung des genannten Benutzerterminals (4A, 4B) einen Zuordnungsschritt (104) eines vorübergehenden Identifizierungscodes zu dem genannten Benutzerterminal (4A, 4B) umfasst, wobei der vorübergehende Identifizierungscode dem genannten Benutzerterminal (4A, 4B) durch die genannten Authentifizierungs- und Kontrollmittel (6, 10) des genannten Hostnetzes zugeordnet ist.

9. Verfahren (100) gemäß Anspruch 8, **dadurch gekennzeichnet, dass** der genannte vorübergehende Identifizierungscode einer Syntax vom Typ T-IMSI entspricht.

10. Verfahren (100) gemäß einem der voranstehenden Ansprüche, **dadurch gekennzeichnet, dass** der erste Netz-Identifizierungscode (C2) einer Syntax vom Typ PLMNid entspricht.

11. Funkkommunikations-Infrastruktur (20), die durch wenigstens zwei Netze (1, 2) gebildet sind, um ein Funkkommunikationsnetz vom Typ Host eines Benutzerterminals (4A, 4B) von den genannten wenigstens zwei Netzen (1, 2) zu identifizieren, wobei die genannte Infrastruktur (20) wenigstens eine Basisstation (3), die zwischen den genannten wenigstens zwei Netzen (1, 2) geteilt ist, und einen Netzkern (1A, 2A) für jedes der genannten Netze (1, 2) umfasst, wobei jeder Netzkern (1A, 2A) umfasst:
∘ Authentifizierungs- und Kontrollmittel (6, 10) von Benutzerterminals (4A, 4B);
∘ eine Datenbank (7, 11), umfassend Informationen bezüglich des Zugangsrechts für Benutzerterminals (4A, 4B) zu den genannten Funckommunikations-Netzen (1, 2)
wobei jedes Benutzerterminal (4A, 4B) einen einzigartigen Benutzer-Identifizierungscode (C1) besitzt, umfassend:
∘ einen ersten Netz-Identifizierungscode (C2) und
∘ einen zweiten Benutzer-Identifizierungscode (C3) des Hostnetzes,
wobei die genannte Infrastruktur (20) **dadurch gekennzeichnet ist, dass**, wenn das genannte Benutzerterminal (4A, 4B) sich in einer Zelle (5) befindet und das genannte Benutzerterminal (4A, 4B) zum ersten Mal eine Zuordnungsanfrage zu einem der genannten Netze (1,2) mittels seines einzigartigen Identifizierungscodes (C1) überträgt, die genannte Infrastruktur (20) geeignet ist, um:
∘ die Zugangsrechte des genannten Benutzerterminals (4A, 4B) zu der genannten Funkkommunikations-Infrastruktur (20) in Abhängigkeit zu dem genannten ersten Netz-Identifizierungscode (C2) zu überprüfen (101), wobei der genannte erste Netz-Identifizierungscode (C2) für die genannten wenigstens zwei Netze (1, 2) gemeinsam ist,
∘ gemäß einem als Vordekodierungs- und Routen bezeichneten Schritt (102) das Hostnetz des genannten Benutzerterminals (4A, 4B) mittels des genannten zweiten Codes (C3) zu identifizieren und die Zuordnungsanfrage des genannten Benutzerterminals (4A, 4B) zu Authentifizierungs- und Kontrollmitteln (6, 10) des identifizierten Hostnetzes zu routen, die zum Authentifizieren des genannten Benutzerterminals (4A, 4B) geeignet sind.

12. Funkkommunikations-Infrastruktur (20) gemäß Anspruch 11, **dadurch gekennzeichnet, dass** jede Organisation eine öffentliche Organisation oder eine private Organisation ist.

13. Funkkommunikations-Infrastruktur (20) gemäß Anspruch 11 oder 12, **dadurch gekennzeichnet, dass** die Basisstation (3) mehrere unterschiedliche Netz-Identifizierungscodes verwaltet, wobei jedes eine Vielzahl von Netzkernen (1A, 2A) von unterschiedlichen Funkkommunikationen identifizieren kann.

14. Funkkommunikations-Infrastruktur (20) gemäß einem der Ansprüche 11 bis 13, **dadurch gekennzeichnet, dass** mehrere Basisstationen (3) einen und denselben Netz-Identifizierungscode verwalten, der für jede Basisstation (3) eine unterschiedliche Vielzahl von Netzkernen (1A, 2A) für Funkkommunikationen identifiziert.

15. Computerprogramm, umfassend eine oder mehrere Anweisungssequenzen, die durch eine Einheit zur Informationsverarbeitung ausführbar sind, wobei die Ausführung der genannten Anweisungssequenzen eine Umsetzung des Verfahrens gemäß irgendeinem der voranstehenden Ansprüche 1 bis 10 zulässt, wenn es auf einen Computer geladen ist.

## Claims

1. Method (100) for identifying a radiocommunications network of the host type of a user terminal (4A, 4B) from among at least two networks (1, 2) forming a radiocommunications infrastructure (20) that comprises:
- a base station (3) shared by the at least two networks (1, 2), said base station (3) being able to:
∘ provide the radio transmission and reception with said user terminal (4A, 4B) being located in a cell (5) attached to said base station (3), and
∘ route data between said user terminal (4A, 4B) and each one of said at least two networks (1, 2),
- a network core (1A, 2A) for each one of said networks (1, 2), each network core (1A, 2A) comprising:
∘ means for authenticating and controlling (6, 10) user terminals (4A, 4B), and
∘ a database (7, 11) containing information concerning the access rights of user terminals (4A, 4B) to one of the said networks (1, 2),
each user terminal (4A, 4B) having a unique user identification code (C1) comprising:
- a first network identifier code (C2), and
- a second user identifier code (C3) of the host network,
said method being **characterised in that** when said user terminal (4A, 4B) is located in a cell (5) and said user terminal (4A, 4B) transmits for the first time a request for attaching to one of the said networks (1, 2) by means of its unique identification code (C1), said method comprising the following steps:
- checking (101) the access rights of said user terminal (4A, 4B) to said radiocommunications infrastructure (20) according to said first network identifier code (C2), said first network identifier code (C2) being shared for said at least two networks (1, 2),
- according to a step (102) referred to as pre-decoding and routing, identifying the host network of said user terminal (4A, 4B) by means of said second code (C3) and routing the request for attaching from said user terminal (4A, 4B) to means for authenticating and controlling (6, 10) of the host network identified which are able to authenticate said user terminal (4A, 4B).

2. Method (100) according to claim 1 **characterised in that** said second user identification code (C3) of the host network comprises:
- an identification code of an organisation (C4) of the host network;
- a user identification code (CS) within the organisation of the host network.

3. Method (100) according to claim 2 **characterised in that** the step of pre-decoding (102) is carried out by means of said identification code of an organisation (C4).

4. Method (100) according to one of the preceding claims **characterised in that** the step (102) of pre-decoding and of routing is carried out in the base station (3).

5. Method (100) according to one of claims 1 to 3 **characterised in that** the step of pre-decoding and of routing (102) is carried out by specific means for authenticating and controlling (6, 10).

6. Method (100) according to one of claims 1 to 3 **characterised in that** the step of pre-decoding (102) is carried out in a specific database (7, 11) communicating with specific means for authenticating and controlling (6, 10) that route the request for attaching to the means for authenticating and controlling of the host network identified.

7. Method (100) according to one of claims 2 to 6 **characterised in that** it comprises a step of authenticating (103) of said user terminal (4A, 48) by means for authenticating and controlling (6, 10) of said host network identified and a database (7, 11) of said host network identified, said step of authenticating (103) being carried out by means:
- of said unique identification code (C1), or
- of said second user identification code (C3) of the host network, or
- of said user identification code (CS) within the organisation of the host network.

8. Method (100) according to one of the preceding claims **characterised in that** after the authenticating of said user terminal (4A, 48) the method (100) comprises a step of allocating (104) a temporary identification code to said user terminal (4A, 48), said temporary identification code being allocated to said user terminal (4A, 48) by said means for authenticating and controlling (6, 10) of said host network.

9. Method (100) according to claim 8 **characterised in that** said temporary identification code is compliant with a syntax of the T-IMSI type.

10. Method (100) according to one of the preceding claims **characterised in that** said first network identifier code (C2) is compliant with a syntax of the PLMNid type.

11. Radiocommunications infrastructure (20) formed by at least two networks (1, 2) in order to identify a radiocommunications network of the host type of a user terminal (4A, 4B) from among said at least two networks (1, 2), said infrastructure (20) comprising at least one base station (3) shared between said at least two networks (1, 2), and a network core (1A, 2A) for each one of said networks (1, 2), each network core (1A, 2A) comprising:
- means for authenticating and controlling (6, 10) user terminals (4A, 4B);
- a database (7, 11) containing information concerning the access rights of user terminals (4A, 4B) to one of the said radiocommunications networks (1, 2),
each user terminal (4A, 4B) having a unique user identification code (C1) comprising:
- a first network identifier code (C2), and
- a second user identification code (C3) of the host network,
said infrastructure (20) being **characterised in that** when said user terminal (4A, 4B) is located in a cell (5) and said user terminal (4A, 4B) transmits for the first time a request for attaching to one of the said networks (1, 2) by means of its unique identification code (C1), said infrastructure (20) is able to:
- check (101) the access rights of said user terminal (4A, 4B) to said radiocommunications infrastructure (20) according to said first network identifier code (C2), said first network identifier code (C2) being shared for said at least two networks (1, 2),
- according to a step (102) referred to as pre-decoding and routing, identify the host network of said user terminal (4A, 4B) by means of said second code (C3) and routing the request for attaching from said user terminal (4A, 4B) to means for authenticating and controlling (6, 10) of the host network identified which are able to authenticate said user terminal (4A, 48).

12. Radiocommunications infrastructure (20) according to claim 11 **characterised in that** each organisation is a public organisation or a private organisation.

13. Radiocommunications infrastructure (20) according to claim 11 or 12 **characterised in that** the base station (3) manages several different network identifier codes, each one able to identify a plurality of different radiocommunications network cores (1A, 2A).

14. Radiocommunications infrastructure (20) according to one of claims 11 to 13 **characterised in that** several base stations (3) manage the same network identifier code identifying for each base station (3) a different plurality of radiocommunications network cores (1A, 2A).

15. Computer program comprising one or several sequences of instructions that can be executed by an information processing unit, the execution of said sequences of instructions allowing for an implementing of the method according to any preceding claim 1 to 10, when it is loaded on a computer.
